# EUROPEAN PATENT APPLICATION

(11) **EP 2 485 366 A1**
(43) Date of publication of application: **08.08.2012**
(21) Application number: 12152986.1
(22) Date of filing: 30.01.2012
(51) Int. Cl.: H02J 13/00

(54) **Smart Substation Management**

(30) Priority: 08.02.2011 US 201113022876
(71) Applicant: General Electric Company, Schenectady, New York 12345 (US)
(72) Inventor: Pamulaparthy, Balakrishna, 500081 Hyderabad (IN)
(74) Representative: Bedford, Grant Richard

(57) **Abstract**

An electrical substation management system maintains, and activates a backup device (290) with, a backup configuration file (280) if a primary device becomes inactive. Peer-to-peer communication may be used in an embodiment so that primary devices (210) communicate with other devices (210, 260, 290) so configured. A master device, such as a substation computer (260), in an embodiment may monitor status of all connected devices (210, 260, 290), while a primary device (210) or a backup device (290) may monitor primary device or IED status and select a backup device (290) for activation if a primary device (210) changes status, and/or retain backup configuration files (280).

## Description

The disclosure relates generally to so-called "smart grid" hardware, software, and equipment for electricity distribution, and more particularly, to a method and apparatus for smart substation management.

Power distribution networks include master stations, transmission lines/networks, substations, distribution lines/networks, and customers. Substations in high and medium voltage distribution networks can include primary devices, such as electrical cables, lines, bus bars, switches, power transformers, and instrument transformers, which are typically arranged in switch yards and/or bays. The primary devices may be automated using a substation automation (SA) system that can use microprocessor-based, programmable secondary devices generally referred to as intelligent electronic devices (IEDs). IEDs protect, control, and monitor the primary devices. Since SA systems usually require interoperability between substation devices, a substation bus, such as an Ethernet network employing, for example, the IEC 61850 SA protocol, can be used to allow communication between devices and/or between the substation and external devices, such as control centers, remote operators, and/or other substations. For example, the substation bus could be connected to and/or controlled by a gateway device, such as a substation computer, that would also be connected to the Internet to allow communication between the substation and control centers, other substations, remote operators, and the like.

While such smart substations have improved the resilience of power distribution grids, it can take a significant amount of time to get a substation back on line after a failure or other event has taken the substation off line. For example, a typical restart and repair of a substation can take as long as 12 hours. Even with some proposed techniques, this would only be reduced to around 3 hours. While this reduction is significant, even such a delay in service can be detrimental to hospitals and other facilities that depend heavily on electrical service. Additional reduction in restart and repair time would be beneficial, as would improved substation reliability and/or resilience.

Various embodiments of the invention disclosed herein can reduce substation restart and repair time, for example, after a device ceases to be in an active state. In an embodiment, a substation system has a plurality of substation devices, including at least one primary intelligent electronic device (IED). A communications arrangement enables communication between IEDs. Each primary IED has a respective configuration file, and the system has at least one backup configuration file for each configuration file. If the status of a primary IED becomes other than active, a backup IED is activated with the backup configuration file corresponding to the primary IED that has ceased to be in an active state.

Another embodiment is a substation management method comprising, for each of at least one primary IED, acquiring a respective configuration file, as well as creating a respective backup configuration file. The at least one primary IED is monitored. Responsive to a primary IED ceasing to be in an active state, a backup IED is activated with the corresponding backup configuration file such that the backup IED takes over for the primary IED that has ceased to be in an active state.

Another embodiment has a computer product for managing a substation including at least one primary intelligent electronic device (IED). The computer product comprises instructions in the form of computer executable program code stored on a computer readable storage device including program code for monitoring a status of each of at least one primary IED in the substation, the status including at least an active state and an inactive state. In addition, the computer product includes program code for creating a backup configuration file for each primary IED and program code for activating a backup IED with the backup configuration file of a primary IED responsive to the primary IED ceasing to be in an active state.

Various other aspects of the invention provide methods, systems, program products, and methods of using and generating each, which include and/or implement some or all of the actions described herein. The illustrative aspects of the invention are designed to solve one or more of the problems herein described and/or one or more other problems not discussed.

Various features of the disclosure will be more readily understood from the following detailed description of the various aspects of the invention taken in conjunction with the accompanying drawings that depict various aspects and embodiments of the invention, in which:
FIG. 1 shows a schematic diagram of a power distribution network in which embodiments may be employed.
FIG. 2 shows a schematic diagram of a substation in which embodiments may be employed.
FIG. 3 shows a schematic flow diagram of a method according to embodiments.
FIG. 4 shows a schematic diagram of an environment including a computer system in which embodiments may be employed.

It is noted that the drawings may not be to scale. The drawings are intended to depict only typical aspects and embodiments of the invention, and therefore should not be considered as limiting the scope of the invention. In the drawings, like numbering represents like elements between the drawings.

The detailed description explains embodiments of the invention, together with advantages and features, by way of example with reference to the drawings.

As indicated above, aspects of the invention may provide a system, method, and computer storage product for managing a substation. As used herein, unless otherwise noted, the term "set" means one or more (i.e., at least one) and the phrase "any solution" means any now known or later developed solution.

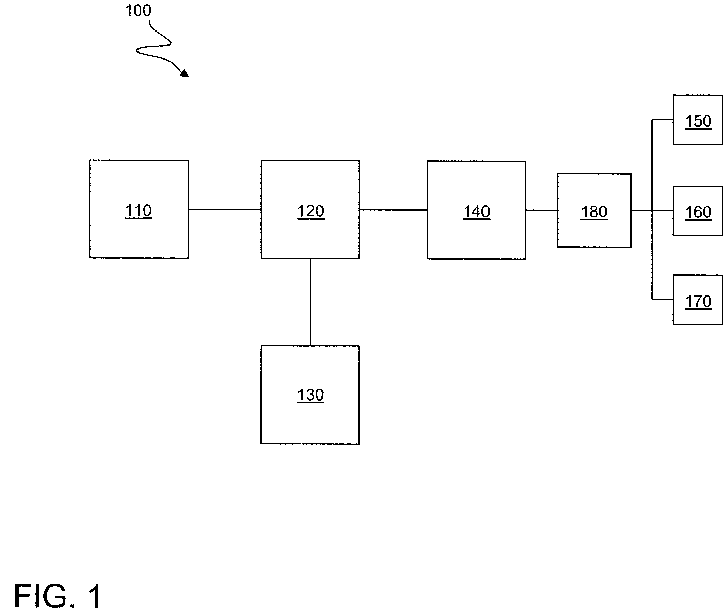

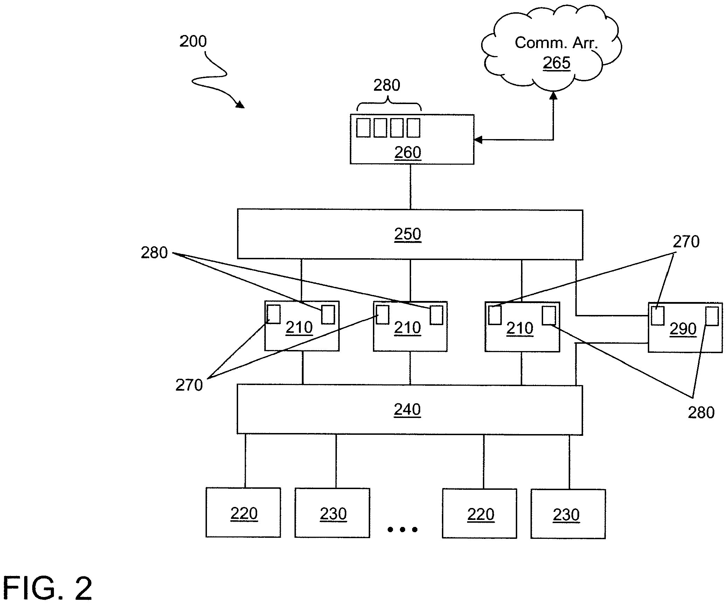

With reference to the accompanying drawings, FIG. 1 shows a schematic diagram of a power generation and distribution network 100 in which master stations 110 are connected to a transmission network 120, such as high tension power lines. Transmission customers 130 may be connected to transmission network 120, and at least one substation 140 takes power from transmission lines 120 and sends it to sub-transmission customers 150, primary customers 160, and/or secondary customers 170 via distribution lines 180. Substations 140 are modified as seen, for example, in the schematic diagram of a substation 200 according to embodiments shown in FIG. 2.

A substation 200 in embodiments includes at least one primary intelligent electronic device (IED) 210 arranged to control devices, such as substation devices. For example, input/output data (I/O) 220 may be received and/or transmitted by measuring units (MUs) 230. A process bus 240, such as an Ethernet-based communications arrangement, may connect primary IEDs 210 to control devices 220, 230 in embodiments. For example, an Ethernet switch may enable communication between primary IEDs 210 and control devices 220, 230. In addition, a substation bus 250 may enable communication between primary IEDs 210 and a substation computer 260 in embodiments. As with process bus 240, substation bus 250 may be an Ethernet-based communications arrangement, such as an Ethernet switch. Process bus 240 and/or substation bus 250 may use any suitable protocol, such as, for example, the IEC 61850 substation automation protocol and/or generic object oriented substation event (GOOSE) protocol. While process bus 240 and substation bus 250 have been shown as separate elements in FIG. 2, embodiments may simply employ a single bus or communications arrangement. In addition, any suitable communications device(s) and/or protocol(s) now known and/or later developed and/or discovered may be used in place of Ethernet switches.

In an embodiment, primary IEDs 210 communicate with each other in a peer-to-peer fashion, sending their status over a communications arrangement, such as process bus 240 and/or substation bus 250, for example. In embodiments, primary IEDs 210 each have a configuration file 270 that includes details about the control devices 220, 230 for which a respective primary IED 210 is responsible, though the configuration file 270 may include other information as warranted for a particular substation configuration. The configuration file 270 in embodiments may be stored in its respective primary IED 210, and a backup configuration file 280 may be stored elsewhere. Each backup configuration file 280 may be a copy of a respective configuration file 270 in at least its initial state, though in embodiments backup configuration files 280 may be updated periodically or simply whenever a primary IED 210 changes configuration. Additionally, a backup configuration file 280 may be created based on sensed configuration of a device. Backup configuration files 280 may be stored in substation computer 260 and/or IEDs 210 and/or in other devices in or external to substation 200. In such an embodiment, each primary IED 210 may store one or more backup configuration files 280 of other IEDs 210. Additionally, primary IEDs 210 may have an active role in detection of a primary IED 210 ceasing to be in an active state. For example, one or more of primary IEDs 210 may monitor other primary IEDs 210 and activate a backup IED 290 with the backup configuration file 280 corresponding to a primary IED 210 that has ceased to be in an active state. Alternatively, a designated primary IED 210 may perform this role, or one or more primary IEDs may notify substation computer 260 of an IED state change. The backup configuration files 280 in embodiments are transferred using, for example, IEC 61850 File Transfer Protocol, though other protocols may be used within the scope of embodiments. Backup IED(s) 290 may be present during normal operation and in communication with one or more of primary IEDs 210. Alternatively, a backup IED 290 may be installed at the time a primary IED 210 ceases to be in an active state.

Substation computer 260 in embodiments may monitor and possibly control primary IEDs 210 and/or control devices 220, 230 through direct communication and/or via other components and may be in communication with another communications arrangement 265, such as, but not limited to, the Internet, to communicate with control centers, remote users, and other substations. This may be in addition to peer-to-peer communication between IEDs 210, 290 described above. In embodiments such as that shown in FIG. 2, substation computer 260 may communicate with primary IEDs 210 via substation bus 250, to monitor primary IED 210 status, such as by receiving updates from primary IEDs 210, including their configurations, their status, and the status and/or configuration of control devices 220, 230. Primary IEDs 210 may be more active in embodiments, such as by sending or transmitting status information over the communications arrangement. As with the peer-to-peer arrangement discussed above, primary IEDs 210 each have a configuration file 270 that includes details about the control devices 220, 230 for which a respective primary IED 210 is responsible, though the configuration file 270 may include other information as warranted for a particular substation configuration. The configuration file 270 in embodiments may be stored in its respective primary IED 210, and a backup configuration file 280 may be stored elsewhere. Each backup configuration file 280 may be a copy of a respective configuration file 270 in at least its initial state, though in embodiments backup configuration files 280 may be updated periodically or simply whenever a primary IED 210 changes configuration. Additionally, a backup configuration file 280 may be created based on sensed configuration of a device. Backup configuration files 280 may be stored in substation computer 260 and/or IEDs 210 and/or in other devices in or external to substation 200. An example of a suitable protocol for transfer of the backup configuration files 280 is IEC 61850 File Transfer Protocol, though other protocols may be used within the scope of embodiments.

Substation computer 260 and/or one or more of IEDs 210, 290 may monitor IEDs 210 for a change in status or state, in embodiments, which state may be at least active, inactive, or failed, or equivalents with different names. Alternatively, two states may be employed, such as active and inactive or equivalents with different names, or another suitable flag may be employed in embodiments to signal/detect a problem with a primary IED 210. If an IED 210 changes from the active state to another state, or simply ceases to be in an active state, a backup configuration file 280 corresponding to the changed IED 210 may be used to activate a backup IED 290. Additionally, a lack of communication with a primary IED 210 may be interpreted as that primary IED ceasing to be in an active state. In embodiments in which the backup configuration file to be used is already on or in the backup IED to be activated, an instruction may be sent or transmitted to use that backup configuration file, such as by a primary IED 210 or substation computer 260. In embodiments in which the backup configuration file to be used is not already on or in the backup IED to be activated, the backup configuration file to be used may be sent, transferred, or transmitted to the backup IED to be activated, or the backup IED may be configured based on the backup configuration file to be used. For example, IEC 61850 File Transfer Protocol may be employed to transfer a backup configuration file 280 in embodiments, though other protocols may be used within the scope of embodiments. As discussed above, at least one backup IED 290 may be pre-installed in substation 200 to minimize down time according to embodiments, though backup IED 290 may instead be added or installed after a change of state in a primary IED 210, such as by installation by a maintenance person. In embodiments in which at least one backup IED 290 is pre-installed, communication between the at least one backup IED 290 and primary IED(s) 210 and/or substation computer 260 may be enabled, and one, selected, or all backup configuration files 280 may be stored and/or maintained in each backup IED 290.

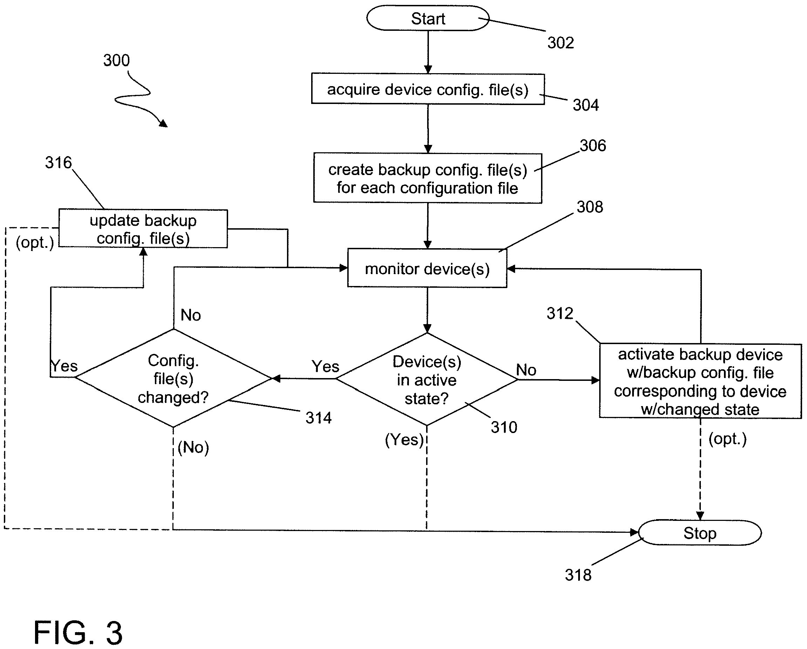

With reference to FIG. 3, a method 300 according to embodiments starts (block 302) and a configuration file for each device to be monitored, such as a primary IED, is acquired (block 304). Backup configuration files are created (block 306) and devices, such as IEDs, are monitored (block 308) by, for example, one ore more IED and/or a substation computer. Monitored device state is checked (block 310), and if a device state has changed from active to another state, has ceased being active, and/or is no longer in communication with the monitoring device, then a backup device, such as a backup IED, may be activated with the backup configuration file corresponding to the device with the changed state (block 312). If no device has changed state, then, in embodiments, configuration files may be checked for changes (block 314). If there is a change, then backup configuration files may be updated (block 316), and block 308 may be repeated. If there is no change, then block 308 may be repeated without a backup configuration file update. In embodiments, monitoring by the method 300, such as blocks 308-316, may continue indefinitely. Alternatively, in other embodiments, the method 300 may stop (block 318) after a change in state result from a device state check (block 310), activation of a backup device (block 312), a no change result in a backup configuration file check (block 314), and/or a backup configuration file update (block 316), as illustrated with dashed lines in FIG. 3. In embodiments in which method 300 stops, when next called, blocks 308-318 may be performed, omitting blocks 304-306, since backup configuration files would already have been acquired in an initial run of method 300. The order in which state and configuration file checks are performed may be changed, and the configuration file check may be eliminated, within the scope of embodiments of the invention disclosed and claimed herein. The flow diagram depicted herein is just one example. There may be many variations to this diagram or the steps (or operations) described therein without departing from the spirit of the invention. For instance, the steps may be performed in a differing order or steps may be added, deleted or modified. All of these variations are considered a part of the claimed invention.

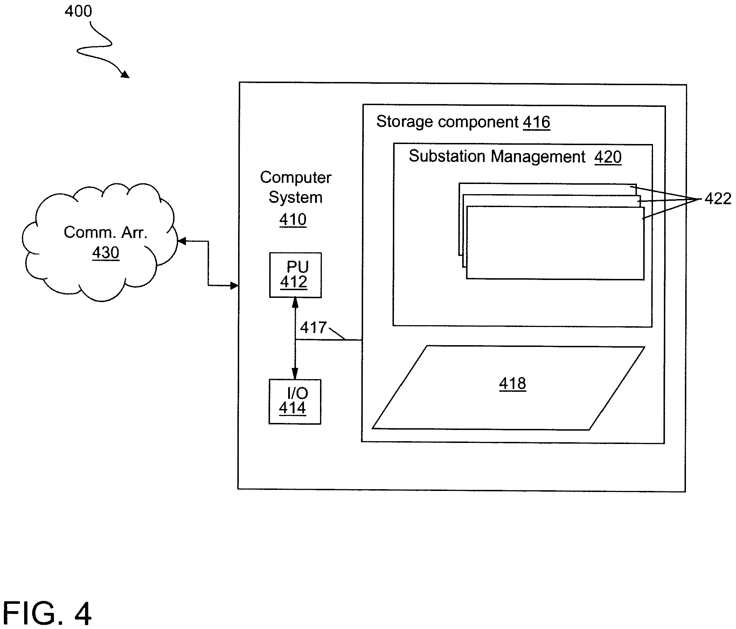

Turning to the drawings, FIG. 4 shows an illustrative environment 400 for a substation management computer product according to an embodiment. To this extent, environment 400 includes a computer system 410, such as an IED or a substation computer, that may perform a process described herein in order to execute a substation management method according to embodiments. In particular, computer system 410 is shown including a substation management program 420, which makes computer system 410 operable to manage a substation by performing a process described herein, such as an embodiment of the substation management method discussed above.

Computer system 410 is shown including a processing component or unit (PU) 412 (e.g., one or more processors), an input/output (I/O) component 414 (e.g., one or more I/O interfaces and/or devices), a storage component 416 (e.g., a storage hierarchy), and a communications pathway 417. In general, processing component 412 executes program code, such as substation management program 420, which is at least partially fixed in storage component 416, which may include one or more computer readable storage medium or device. While executing program code, processing component 412 may process data, which may result in reading and/or writing transformed data from/to storage component 416 and/or I/O component 414 for further processing. Pathway 417 provides a communications link between each of the components in computer system 410. I/O component 414 may comprise one or more human I/O devices, which enable a human user to interact with computer system 410 and/or one or more communications devices to enable a system user to communicate with computer system 410 using any type of communications link. In embodiments, a communications arrangement 430, such as networking hardware/software, enables computing device 410 to communicate with other devices in and outside of a substation in which it is installed. To this extent, substation management program 420 may manage a set of interfaces (e.g., graphical user interface(s), application program interface, and/or the like) that enable human and/or system users to interact with substation management program 420. Further, substation management program 420 may manage (e.g., store, retrieve, create, manipulate, organize, present, etc.) data, such as substation management data 418, using any solution.

Computer system 410 may comprise one or more general purpose computing articles of manufacture (e.g., computing devices) capable of executing program code, such as substation management program 420, installed thereon. As used herein, it is understood that "program code" means any collection of instructions, in any language, code or notation, that cause a computing device having an information processing capability to perform a particular action either directly or after any combination of the following: (a) conversion to another language, code or notation; (b) reproduction in a different material form; and/or (c) decompression. Additionally, computer code may include object code, source code, and/or executable code, and may form part of a computer product when on at least one computer readable medium. It is understood that the term "computer readable medium" may comprise one or more of any type of tangible medium of expression, now known or later developed, from which a copy of the program code may be perceived, reproduced, or otherwise communicated by a computing device. For example, the computer readable medium may comprise: one or more portable storage articles of manufacture; one or more memory/storage components of a computing device; paper; and/or the like. Examples of memory/storage components include magnetic media (floppy diskettes, hard disc drives, tape, etc.), optical media (compact discs, digital versatile/video discs, magneto-optical discs, etc.), random access memory (RAM), read only memory (ROM), flash ROM, erasable programmable read only memory (EPROM), or any other computer readable storage medium now known and/or later developed and/or discovered on which the computer program code is stored and with which the computer program code can be loaded into and executed by a computer. When the computer executes the computer program code, it becomes an apparatus for practicing the invention, and on a general purpose microprocessor, specific logic circuits are created by configuration of the microprocessor with computer code segments. A technical effect of the executable instructions is to implement a substation management method and/or system and/or computer product that activates a backup device of the substation in the event that a primary device ceases to be in an active state, the activation including using a backup configuration file corresponding to the primary device which has ceased to be in an active state.

The computer program code may be written in computer instructions executable by the controller, such as in the form of software encoded in any programming language. Examples of suitable programming languages include, but are not limited to, assembly language, VHDL (Verilog Hardware Description Language), Very High Speed IC Hardware Description Language (VHSIC HDL), FORTRAN (Formula Translation), C, C++, C#, Java, ALGOL (Algorithmic Language), BASIC (Beginner All-Purpose Symbolic Instruction Code), APL (A Programming Language), ActiveX, HTML (HyperText Markup Language), XML (eXtensible Markup Language), and any combination or derivative of one or more of these and/or others now known and/or later developed and/or discovered. To this extent, substation management program 420 may be embodied as any combination of system software and/or application software.

Further, substation management program 420 may be implemented using a set of modules 422. In this case, a module 422 may enable computer system 410 to perform a set of tasks used by substation management program 420, and may be separately developed and/or implemented apart from other portions of substation management program 420. As used herein, the term "component" means any configuration of hardware, with or without software, which implements the functionality described in conjunction therewith using any solution, while the term "module" means program code that enables a computer system 410 to implement the actions described in conjunction therewith using any solution. When fixed in a storage component 416 of a computer system 410 that includes a processing component 412, a module is a substantial portion of a component that implements the actions. Regardless, it is understood that two or more components, modules, and/or systems may share some/all of their respective hardware and/or software. Further, it is understood that some of the functionality discussed herein may not be implemented or additional functionality may be included as part of computer system 410.

When computer system 410 comprises multiple computing devices, each computing device may have only a portion of substation management program 420 fixed thereon (e.g., one or more modules 422). However, it is understood that computer system 410 and substation management program 420 are only representative of various possible equivalent computer systems that may perform a process described herein. To this extent, in other embodiments, the functionality provided by computer system 410 and substation management program 420 may be at least partially implemented by one or more computing devices that include any combination of general and/or specific purpose hardware with or without program code. In each embodiment, the hardware and program code, if included, may be created using standard engineering and programming techniques, respectively.

Regardless, when computer system 410 includes multiple computing devices, the computing devices may communicate over any type of communications link. Further, while performing a process described herein, computer system 410 may communicate with one or more other computer systems using any type of communications link. In either case, the communications link may comprise any combination of various types of wired and/or wireless links; comprise any combination of one or more types of networks; and/or utilize any combination of various types of transmission techniques and protocols now known and/or later developed and/or discovered.

As discussed herein, substation management program 420 enables computer system 410 to implement a substation management product and/or method, such as that shown schematically in FIG. 3. Computer system 410 may obtain substation management data 418 using any solution. For example, computer system 410 may generate and/or be used to generate substation management data 418, retrieve substation management data 418 from one or more data stores, receive substation management data 418 from another system or device in or outside of the substation, and/or the like.

In another embodiment, the invention provides a method of providing a copy of program code, such as substation management program 420 (FIG. 4), which implements some or all of a process described herein, such as that shown schematically in and described with reference to FIG. 3. In this case, a computer system may process a copy of program code that implements some or all of a process described herein to generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program fixed in at least one computer readable medium. In either case, the set of data signals may be transmitted/received using any type of communications link.

In still another embodiment, the invention provides a method of generating a system for implementing a substation management product and/or method. In this case, a computer system, such as computer system 410 (FIG. 4), can be obtained (e.g., created, maintained, made available, etc.), and one or more components for performing a process described herein can be obtained (e.g., created, purchased, used, modified, etc.) and deployed to the computer system. To this extent, the deployment may comprise one or more of: (1) installing program code on a computing device; (2) adding one or more computing and/or I/O devices to the computer system; (3) incorporating and/or modifying the computer system to enable it to perform a process described herein; and/or the like.

It is understood that aspects of the invention can be implemented as part of a business method that performs a process described herein on a subscription, advertising, and/or fee basis. That is, a service provider could offer to implement a substation management product and/or method as described herein. In this case, the service provider can manage (e.g., create, maintain, support, etc.) a computer system, such as computer system 410 (FIG. 4), that performs a process described herein for one or more customers. In return, the service provider can receive payment from the customer(s) under a subscription and/or fee agreement, receive payment from the sale of advertising to one or more third parties, and/or the like.

The corresponding structures, materials, acts, and equivalents of any and all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A substation system comprising:
   a plurality of substation devices including at least one primary intelligent electronic device (IED), each primary IED having a respective configuration file;
   a communications arrangement enabling communication by at least one of the plurality of substation devices, including enabling communication by at least one primary IED;
   at least one backup configuration file for each configuration file; and
   wherein, responsive to a primary IED ceasing to be in an active state, at least one of the plurality of substation devices activates a backup IED with the backup configuration file corresponding to the inactive primary IED.
2. The substation system of clause 1, wherein each of the plurality of substation devices communicates with all other of the plurality of substation devices in a peer-to-peer fashion.
3. The substation system of any preceding clause, wherein the plurality of substation devices includes a substation computer and other of the plurality of substation devices communicate with the substation computer.
4. The substation system of any preceding clause, further comprising at least one backup IED, wherein backup configuration files are copied to each backup IED.
5. The substation system of any preceding clause, further comprising at least one backup IED, wherein each backup configuration file is assigned to a particular backup IED.
6. The substation system of any preceding clause, wherein each primary IED sends a status over the communications arrangement.
7. A substation management method, the method comprising:
   for each of at least one primary intelligent electronic device (IED):
      acquiring a respective configuration file, and
      creating a respective backup configuration file;
   monitoring the at least one primary IED; and
   responsive to a primary IED ceasing to be in an active state, activating a backup IED with the corresponding backup configuration file such that the backup IED takes over for the primary IED with changed state.
8. The substation management method of any preceding clause, further comprising providing a communications arrangement employing a communications system in each of the at least one primary IED.
9. The substation management method of any preceding clause, wherein each IED communicates with at least one other IED in a peer-to-peer fashion.
10. The substation management method of any preceding clause, further comprising providing a substation computer and at least one IED communicates with the substation computer.
11. The substation management method of any preceding clause, wherein each primary IED sends a status over the communications arrangement.
12. The substation management method of any preceding clause, further comprising checking for changes in primary IED configuration and updating each backup configuration file corresponding to a primary IED with a changed configuration.
13. The substation management method of any preceding clause, further comprising providing at least one backup IED, wherein a backup configuration file is copied to each backup IED.
14. A computer product for managing a substation including at least one primary intelligent electronic device (IED), the computer product comprising instructions in the form of computer executable program code stored on a computer readable storage medium and including:
   program code for monitoring a status of each of at least one primary IED in the substation, the status including at least an active state and an inactive state;
   program code for creating a backup configuration file for each primary IED;
      and
   program code for activating a backup IED with the backup configuration file corresponding to a primary IED responsive to that primary IED ceasing to be in the active state.
15. The computer product of any preceding clause, further comprising program code for enabling peer-to-peer communication between IEDs, and program code for enabling each primary IED to send a respective status to at least one other IED.
16. The computer product of any preceding clause, wherein the substation further comprises at least one backup IED and the computer product further comprises program code for maintaining at least one backup configuration file corresponding to at least one primary IED on each backup IED.
17. The computer product of any preceding clause, wherein the substation includes a substation computer and the computer product further comprises program code for enabling communication between the substation computer and primary and backup IEDs, and program code for the substation computer selecting a backup IED to activate responsive to a primary IED ceasing to be in an active state.
18. The computer product of any preceding clause, wherein the substation includes a substation computer and the computer product further comprises program code for enabling communication between the substation computer and primary IEDs and at least one backup IED, and program code for maintaining at least one respective backup configuration file of at least one primary IED on the substation computer.
19. The computer product of any preceding clause, further comprising program code that enables the substation computer to transfer a backup configuration file to a backup IED.
20. The computer product of any preceding clause, wherein the computer product further comprises program code for updating a backup configuration file responsive to a change in configuration of a respective primary IED.

## Claims

1. A substation system (200) comprising:
a plurality of substation devices including at least one primary intelligent electronic device (IED, 210), each primary IED (210) having a respective configuration file (270);
a communications arrangement (240, 250, 265) enabling communication by at least one of the plurality of substation devices, including enabling communication by at least one primary IED (210);
at least one backup configuration file (280) for each configuration file (270);
and
wherein, responsive to a primary IED (210) ceasing to be in an active state, at least one of the plurality of substation devices activates a backup IED (290) with the backup configuration file (280) corresponding to the inactive primary IED.

2. The substation system (200) of claim 1, further comprising at least one backup IED (290), wherein each backup configuration file (280) is assigned to a particular backup IED (290).

3. A substation management method (300), the method comprising:
for each of at least one primary intelligent electronic device (IED, 210):
acquiring a respective configuration file (304), and
creating a respective backup configuration file (306);
monitoring the at least one primary IED(308); and
responsive to a primary IED (210) ceasing to be in an active state, activating a backup IED with the corresponding backup configuration file such that the backup IED takes over for the primary IED with changed state (312).

4. The substation management method (300) of claim 3, further comprising checking for changes in primary IED configuration (314) and updating each backup configuration file corresponding to a primary IED with a changed configuration (316).

5. The substation system (200) or method (300) according to any preceding claim, wherein a backup configuration file (280) is copied to each of at least one backup IED (290).

6. The substation system (200) or method (300) according to any preceding claim, wherein each IED (210, 290) communicates with at least one other IED (210, 290) in a peer-to-peer fashion.

7. The substation system (200) or method (300) according to any preceding claim, wherein at least one IED (210, 290) communicates with a substation computer (260).

8. The substation system (200) or method (300) according to any preceding claim, wherein each primary IED (210) sends a status over the communications arrangement (240, 250, 265).

9. A computer product for managing a substation including at least one primary intelligent electronic device (IED, 210), the computer product comprising instructions in the form of computer executable program code stored on a computer readable storage medium (416) and including:
program code for monitoring a status of each of at least one primary IED (210) in the substation, the status including at least an active state and an inactive state;
program code for creating a backup configuration file (280) for each primary IED (210);
program code for activating a backup IED (290) with the backup configuration file (280) corresponding to a primary IED (210) responsive to that primary IED (210) ceasing to be in the active state;
program code for enabling peer-to-peer communication between IEDs (210, 290); and
program code for enabling each primary IED (210) to send a respective status to at least one other IED (210, 290).

10. The computer product of claim 9, wherein the substation further comprises at least one backup IED (290) and the computer product further comprises program code for maintaining at least one backup configuration file (280) corresponding to at least one primary IED (210) on each backup IED (290).
